# EUROPÄISCHE PATENTSCHRIFT

(11) **EP 2 441 712 B1**
(45) Veröffentlichungstag und Bekanntmachung des Hinweises auf die Patenterteilung: **23.10.2013**
(21) Anmeldenummer: 11182232.6
(22) Anmeldetag: 21.09.2011
(51) Int. Cl.: B65G 57/06, B65G 57/24

(54) **Greiferkopf und Beladestation**
Loom and charging station
Tête de poignée et station de chargement

(30) Priorität: 14.10.2010 DE 102010048524
(43) Veröffentlichungstag der Anmeldung: 18.04.2012
(73) Patentinhaber: Krones Aktiengesellschaft, 93073 Neutraubling (DE)
(72) Erfinder: Wegener, Kai Dr., 81369 München (DE); Kirschner, Peter, 83139 Söchtenau (DE)
(74) Vertreter: Benninger, Johannes

(56) Entgegenhaltungen:
- WO-A1-2010/047595
- DE-A1- 4 206 038
- DE-A1- 4 213 352
- FR-A1- 2 436 727
- KR-A- 20090 047 747

## Beschreibung

Die vorliegende Erfindung betrifft einen Greiferkopf und eine Beladestation für gruppierte Lagen von Gebinden oder Artikeln sowie ein Verfahren zur Aufnahme und zum Umsetzen von gruppierten Lagen von Gebinden oder Artikeln gemäß den Merkmalen der Oberbegriffe der Ansprüche 1, 7 und 11. Ein solcher Greiferkopf ist bereits aus WO 2010047595 bekannt.

Bei der Erstellung von Gebinden aus befüllten Getränkebehältern oder ähnlichen Artikeln müssen diese und / oder die dabei verwendeten Packhilfsmittel oder Verpackungen häufig von einer Stelle zu einer anderen transportiert werden. Hierfür werden die Gebinde o.ä. im Allgemeinen mittels Greifern erfasst und umgesetzt.

Bekannt sind Vorrichtungen, die Gebindelagen von Gruppierstationen mittels eines Schiebers oder auch mit Vertikalhub zur Leistungssteigerung beim Rückhub in eine Beladestation oder einen Jalousiegreiferkopf einschieben. Derartige Jalousiegreiferköpfe eignen sich besonders zum präzisen und schonenden Palettieren von Artikeln und Gebinden wie bspw. Schrumpfgebinde und Kartonagen in ganzen Lagen. Die zu palettierende Lage wird zuvor von einer Gruppierstation vorbereitet und anschließend mittels eines geeigneten Transportsystems in den Jalousiegreiferkopf überführt, wo sie durch einen Rollenteppich und seitlich angebrachte Zentriergeländer gehalten wird. Um die Lage abzusetzen, öffnet sich der Rollenteppich nach beiden Seiten.

Ein Hubgerät zum Handhaben von Gegenständen sowie eine Einrichtung zum Be- und Entladen von Paletten wird in DE 196 26 826 A1 offenbart. Dieses weist einen an einem Gelenkarm befestigten Hubkopf auf, der der Aufnahme, dem Transport und dem Absetzen von Gegenständen, insbesondere von Kartons dient. Der Hubkopf kann zusätzlich einen Palettengreifer aufweisen, um von Zeit zu Zeit leere Paletten zu den Palettenstationen zu transportieren. Der Palettengreifer weist hierfür zu öffnende und zu schließende Tragschenkel auf.

Ein vorrangiges Ziel der Erfindung wird darin gesehen, die Handhabung von gruppierten Artikeln und Paletten mit geeigneten Handhabungsvorrichtungen zu ermöglichen, die möglichst universell aufgebaut und einsetzbar sind. Insbesondere sollte die Handhabungsvorrichtung mehrere verschiedene Funktionen des Aufnehmens, Greifens und Umsetzens der gruppierten Artikel und Paletten auf sich vereinen.

Die obige Aufgabe wird durch einen Greiferkopf, eine Beladestation sowie ein Verfahren gelöst, die die Merkmale in der Patentansprüche 1, 7 und 11 umfassten Weitere vorteilhafte Ausgestaltungen werden durch die Unteransprüche beschrieben.

Das oben genannte Ziel wird mit einem Greiferkopf für gruppierte Lagen von Gebinden und / oder Artikeln erreicht, der eine ein-, zwei- oder mehrteilige horizontal bewegliche Auflagefläche zur Aufnahme und zum Umsetzen der Lagen von einer ersten Position und zum Freigeben der Lagen in einer zweiten Position durch Öffnen der beweglichen Auflageebene aufweist. Wobei die horizontal bewegliche mehrteilige Auflagefläche in geschlossenem Zustand aneinander grenzende und / oder formschlüssig ineinander greifende Stirnseiten aufweist. Gemäß der vorliegenden Erfindung ist vorgesehen, dass die Stirnseiten in zumindest teilweise geöffnetem Zustand Mittel zum Greifen, Halten und/oder Untergreifen von Paletten oder anderen Gegenständen bilden.

Der Greiferkopf kann insbesondere als so genannter Jalousiegreiferkopf mit zweiteiligem beweglichem Rollboden ausgebildet sein, wobei die zueinander in horizontaler Richtung beweglichen Rollbodenteile jeweils zueinander weisende Stirnseiten aufweisen, die als Mittel zum Greifen, Halten und / oder Untergreifen von Paletten oder anderen Gegenständen ausgebildet sind. Wahlweise kann der Greiferkopf bspw. auch als so genannter Plattengreiferkopf mit zweiteiligem, horizontal beweglichem Auflageboden ausgebildet sein, wobei die zueinander in horizontaler Richtung beweglichen Auflagebodenteile jeweils zueinander weisende Stirnseiten aufweisen, die als Mittel zum Greifen, Halten und / oder Untergreifen von Paletten oder anderen Gegenständen ausgebildet sind.

Die vorliegende Erfindung kann einen wesentlichen Beitrag zur Vereinfachung des Palettenhandlings liefern, da der Greiferkopf nun nicht mehr nur die Aufnahme und das Umsetzen der Gebindelagen durch Öffnen oder Schließen seines Tragbodens ermöglicht, sondern wahlweise auch das seitliche Greifen, Halten und Umsetzen von dafür geeigneten starren und formstabilen Tragelementen wie bspw. Paletten, auf denen die Gebindelagen in einer oder wahlweise in mehreren übereinander gestapelten Lagen stehen. Hierzu ist vorgesehen, dass zwei bewegliche Gebindetragflächen des Jalousiegreifers oder des Plattengreifers in der gleichen Ebene aufeinander zufahren können, wodurch die Paletten in seitlichem Eingriff gehalten werden können.

Die stirnseitig an den Auflageflächen des Greiferkopfes angeordneten Mittel zum Greifen, Halten und / oder Untergreifen der Paletten oder Gegenstände können bspw. durch formschlüssig ineinander greifende Verzahnungsprofile ausgebildet sein. Wahlweise kann der erfindungsgemäße Greiferkopf auch stirnseitig an den Auflageflächen angeordnete Mittel zum Greifen, Halten und / oder Untergreifen der Paletten oder Gegenstände aufweisen, die durch zumindest randseitig haftende und / oder die Paletten oder Gegenstände reibschlüssig greifende und / oder klemmend haltende Greif- und Haltemittel ausgebildet sind. Hierbei ist jeweils vorgesehen, dass die stirnseitig an den Auflageflächen angeordneten Mittel zum Greifen, Halten und / oder Untergreifen der Paletten oder Gegenstände durch aufeinander zugestellte und / oder mit einer gegensinnig wirkenden Schließkraft beaufschlagten Stirnseiten die Paletten oder Gegenstände klemmend halten.

Die beiden vorderen Kanten der Tragflächen des Jalousiegreiferteppichs oder wahlweise des verwendeten Plattengreifers können Paletten oder Gebinde in einem Reibschluss klemmen oder durch Unterfahren eines Greifobjektes eine Palette oder Gebinde mit Formschluss greifen. Damit kann man das Objekt von einer Stelle anheben und an anderer Stelle wieder absetzen. Teure Einzel-Zusatzagregate wie Packhilfsmittelmaschine mit Palettengreifer können durch die günstige Zusatzfunktion im Jalousiegreifer vermieden werden.

Die Erfindung umfasst weiterhin eine Beladestation zur Aufnahme und zum Umsetzen von gruppierten Lagen von Gebinden und / oder Artikeln von einer ersten Position und zum Freigeben der Lagen in einer zweiten Position, die wenigstens einen Greiferkopf gemäß einer der zuvor beschriebenen Ausführungsvarianten aufweist, der eine ein-, zwei- oder mehrteilige horizontal bewegliche Auflagefläche umfasst. Die Auflagefläche weist in geschlossenem Zustand aneinander grenzende und / oder formschlüssig ineinander greifende Stirnseiten auf, die in geöffnetem Zustand Mittel zum Greifen, Halten und / oder Untergreifen von Paletten oder anderen Gegenständen bilden. Die Beladestation bzw. der Greiferkopf kann mindestens eine, vorzugsweise zwei bewegliche Gebindetragflächen aufweisen, die insbesondere durch einen Rollenteppich gebildet sein können, der die Lage unterfährt und beim Umsetzvorgang verschlossen ist.

Die Beladestation kann mit mindestens einer ersten Gebindelage und mindestens einer Palette oder mindestens einer zweiten Gebindelage beladbar sein. Die Palette oder zweite Gebindelage kann an der Beladestation durch Greifen oder durch eine reibschlüssige Klemmverbindung befestigbar sein.

Es sei an dieser Stelle erwähnt, dass die Auflagefläche nicht zwingend zwei symmetrisch bewegbare Tragbodenhälften aufweisen muss, sondern grundsätzlich auch durch nur ein bewegliches und ein dazu komplementäres feststehendes Tragbodenteil gebildet sein kann. Eine solche asymmetrische Anordnung mit einem einteilig ausgebildeten, in horizontaler Richtung verschiebbaren Jalousieboden sieht gleichermaßen stirnseitig angeordnete Haltemittel vor, die in entsprechender Weise funktionieren, so dass die aufzunehmende und zu greifende Palette mittels des beweglichen Tragbodenteils gegen den feststehenden Teil zugestellt wird, wobei die stirnseitigen Greif- bzw. Haltemittel an den Seiten der Palette angreifen und diese dadurch halten und heben.

Die erwähnten formschlüssig ineinander greifende Verzahnungsprofile der stirnseitigen Haltemittel können bspw. durch geeignete Blechkämme o. dgl. gebildet sein, die wahlweise ein geeignetes Wellen-, Rechteck- oder anderes Verzahnungsprofil aufweisen, welches in geschlossenem Zustand einen weitgehend geschlossenen Tragboden bildet, so dass auch Lagen von lose aneinander stehenden Artikeln oder Gebinden zuverlässig aufgenommen und gehalten werden können.

Schließlich umfasst die vorliegende Erfindung ein Verfahren zur Aufnahme und zum Umsetzen von gruppierten Lagen von Gebinden und / oder Artikeln von einer ersten Position und zum Freigeben der Lagen in einer zweiten Position, bei dem die gruppierten Lagen mit wenigstens einem Greiferkopf gemäß einer der zuvor beschriebenen Ausführungsvarianten bewegt werden, wobei dessen ein-, zwei- oder mehrteilige horizontal bewegliche Auflagefläche in geschlossenem Zustand aneinander grenzende und / oder formschlüssig ineinander greifende Stirnseiten aufweist, die in geöffnetem Zustand Paletten oder andere Gegenstände greifen, halten und / oder untergreifen, wobei sie die Paletten oder Gegenstände durch aufeinander zugestellte und / oder mit einer gegensinnig wirkenden Schließkraft beaufschlagten Stirnseiten klemmend halten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figur 1 zeigt eine schematische Ansicht eines Jalousiegreiferkopfes gemäß dem bekannten Stand der Technik.

Figuren 2 bis 5 zeigen jeweils eine schematische Ansicht eines erfindungsgemäß modifizierten Jalousiegreiferkopfes mit unterschiedlich weit geöffnetem Rollteppich.

Figur 6 zeigt eine Ausführungsform der Mittel zum Greifen, Festhalten und / oder Untergreifen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

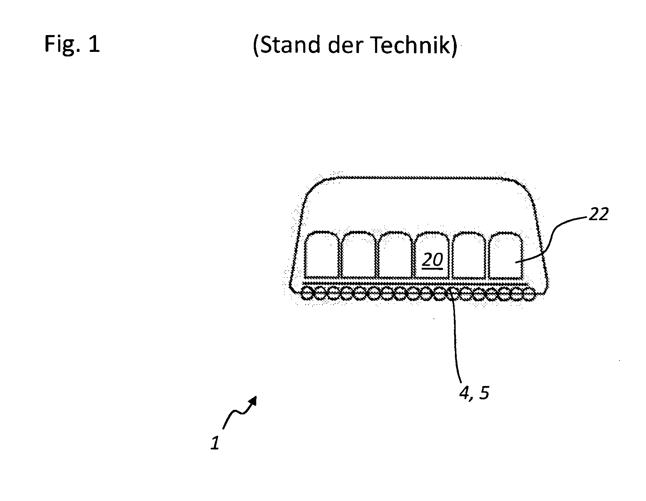

Figur 1 zeigt eine schematische Ansicht eines Jalousiegreiferkopfes 1 gemäß dem bekannten Stand der Technik. Der Jalousiegreiferkopf 1 zum Umsetzen von gruppierten Lagen 22 von Gebinden 20 und / oder Artikeln von einer ersten Position in eine zweite Position umfasst vorzugsweise zwei bewegliche Gebindetragflächen 4, insbesondere einen Rollenteppich 5, auf dem die Flaschen, Artikel, Gebinde 20 o.ä. platziert und anschließend durch Bewegung des Jalousiegreiferkopfes 1 an eine andere Stelle positioniert werden.

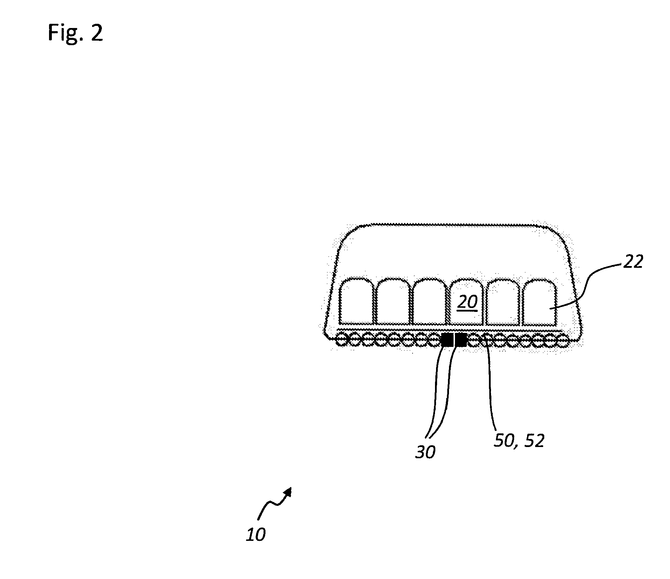

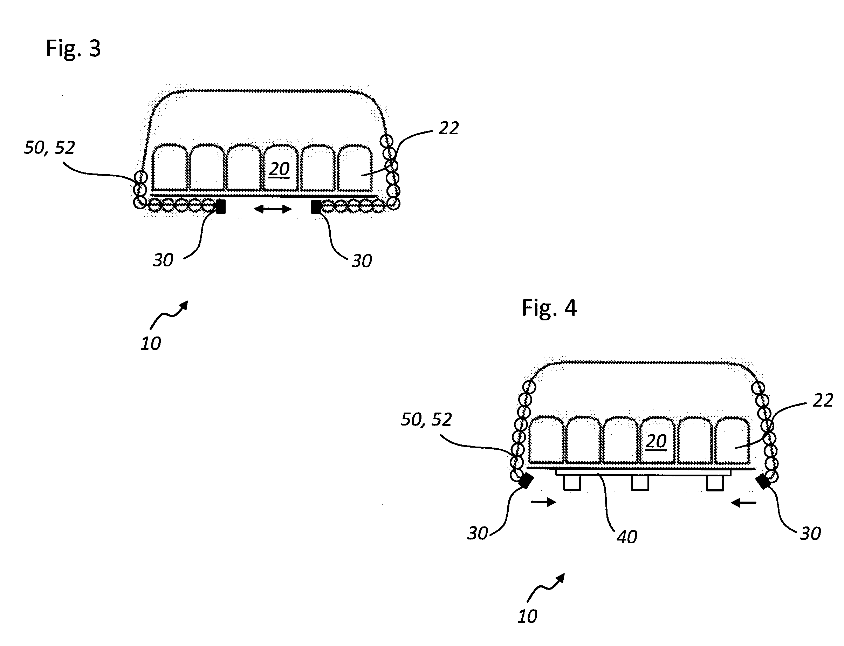

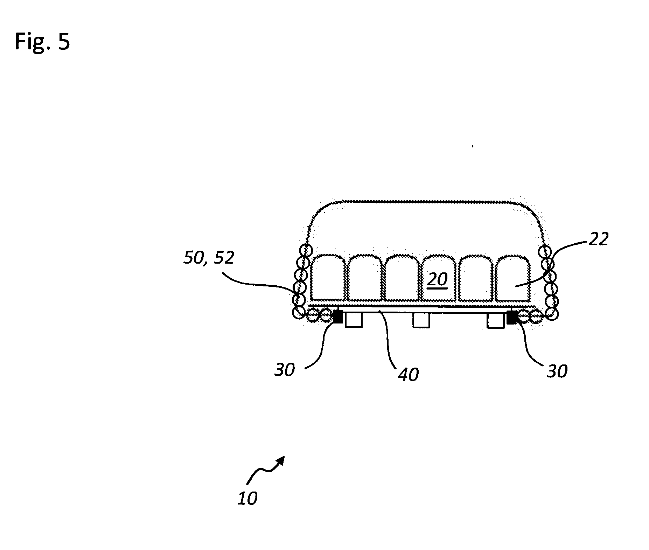

Figur 2 zeigt eine Beladestation zum Umsetzen von gruppierten Lagen 22 von Gebinden 20 und / oder Artikeln von einer ersten Position in eine zweite Position, insbesondere einen Jalousiegreiferkopf 10 der erfindungsgemäß Mittel 30 zum Greifen, Festhalten und / oder Untergreifen von Paletten (nicht dargestellt, vgl. Fig. 4 und Fig. 5) oder zum Greifen, Festhalten und / oder Untergreifen einer zweiten Lage 22 von Gebinden 20 aufweist. Insbesondere kann ein solcher Jalousiegreiferkopf 10 gleichzeitig mindestens eine Lage 22 von Gebinden 20 und / oder Artikeln und mindestens eine Palette aufnehmen und umsetzen oder aber er kann gleichzeitig mit mindestens zwei Gebindelagen 22 beladen werden. Der Jalousiegreiferkopf 10 kann aber weiterhin auch ausschließlich dem Umsetzen von einzelnen Gebindelagen 20 dienen oder aber er kann auch verwendet werden, um ausschließlich eine Palette (nicht dargestellt) umzusetzen.

Der Jalousiegreiferkopf 10 umfasst mindestens eine, vorzugsweise zwei bewegliche Gebindetragflächen 50, insbesondere einen Rollenteppich 52, der die Gebindelage 22 unterfährt und beim Umsetzvorgang verschlossen ist.

Figur 3 bis Figur 5 stellen schematisch das Öffnen und Schließen eines Jalousiegreiferkopfes 10 und das Greifen einer Palette 40 dar. Vorzugsweise ist die Palette 40 oder zweite Gebindelage (nicht dargestellt) an der Beladestation bzw. dem Jalousiegreiferkopf 10 durch Greifen oder durch eine reibschlüssige Klemmverbindung über die Mittel 30 befestigbar.

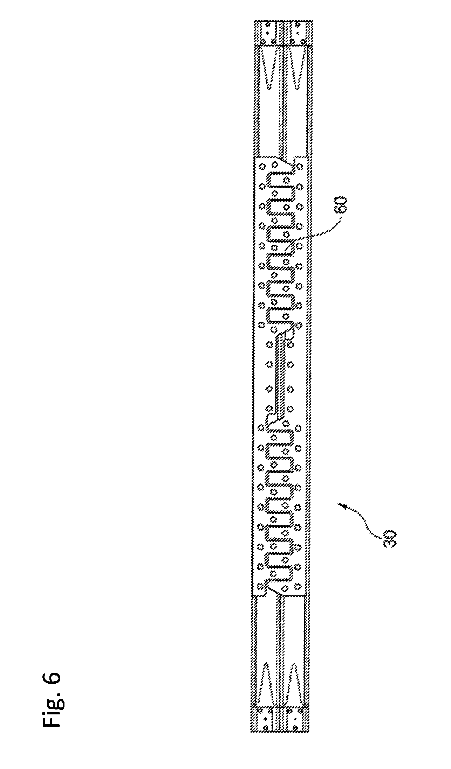

Eine Ausführungsform der Mittel 30 zum Greifen, Festhalten und / oder Untergreifen ist in Figur 6 dargestellt. Im gezeigten Ausführungsbeispiel sind die stirnseitig an den Auflageflächen 50, 52 (nicht dargestellt, vgl. Figuren 2 bis 5) des Jalousiegreiferkopfes 10 (nicht dargestellt, vgl. Figuren 2 bis 5) angeordneten Mittel 30 zum Greifen, Halten und / oder Untergreifen der Paletten als formschlüssig ineinander greifende rechteckige Verzahnungsprofile 60 ausgebildet. Im geschlossenem Zustand des Rollteppichs 52 (nicht dargestellt) bildet sich somit ein weitgehend geschlossene Tragboden, so dass auch Lagen von lose aneinander stehenden Artikeln oder Gebinden zuverlässig aufgenommen und gehalten werden können.

Die beiden so ausgebildeten vorderen Kanten der Tragflächen des Jalousiegreifer- bzw. Rollteppichs 52 können Paletten 40 oder Gebinde in einem Reibschluss klemmen oder durch Unterfahren des Greifobjektes eine Palette 40 oder Gebinde mit Formschluss greifen. Damit kann man das Objekt von einer Stelle anheben und an anderer Stelle wieder absetzen.

Die vorliegende Erfindung ermöglicht einen wesentlichen Beitrag zur Vereinfachung des Palettenhandlings, da der modifizierte Jalousiekreiferkopf 10 nun zusätzlich zur Aufnahme und dem Umsetzen der Gebindelagen 22 wahlweise auch das seitliche Greifen, Halten und Umsetzen von dafür geeigneten starren und formstabilen Tragelementen wie bspw. Paletten 40, auf denen die Gebindelagen 22 in einer oder wahlweise in mehreren übereinander gestapelten Lagen stehen, ermöglicht.

Die beiden vorderen Kanten der Tragflächen des Jalousiegreiferteppichs 50, 52 können Paletten 40 oder Gebindelagen 22 in einem Reibschluss klemmen oder durch Unterfahren eines Greifobjektes eine Palette 40 oder eine Gebindelage 22 mit Formschluss greifen. Dies ermöglicht zum einen, dass beispielsweise eine Gebindelage 22 und eine Palette 40 gemeinsam umgesetzt werden. Weiterhin kann der modifizierte Jalousiegreiferkopf 10 nunmehr auch zum Umsetzen von Paletten 40 verwendet werden. Dadurch kann auf teure Einzel-Zusatzagregate wie Packhilfsmittelmaschine mit Palettengreifer verzichtet werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Jalousiegreiferkopf (Stand der Technik)
- 4: Gebindetragfläche (Stand der Technik)
- 5: Rollteppich (Stand der Technik)
- 10: Jalousiegreiferkopf
- 20: Gebinde
- 22: Gebindelage
- 30: Mittel zum zum Greifen, Halten und / oder Untergreifen
- 40: Palette
- 50: Gebindetragfläche
- 52: Rollteppich
- 60: Verzahnungsprofil

## Patentansprüche

1. Greiferkopf für gruppierte Lagen (22) von Gebinden (20) und / oder Artikeln, umfassend eine ein-, zwei- oder mehrteilige horizontal bewegliche Auflagefläche (50, 52) zur Aufnahme und zum Umsetzen der Lagen (22) von einer ersten Position und zum Freigeben der Lagen (22) in einer zweiten Position durch Öffnen der beweglichen Auflageebene (50), wobei die horizontal bewegliche Auflagefläche (50) in geschlossenem Zustand aneinander grenzende und/oder formschlüssig ineinander greifende Stirnseiten aufweist, **dadurch gekennzeichnet, dass** die Stirnseiten in zumindest teilweise geöffnetem Zustand Mittel (30) zum Greifen, Halten und / oder Untergreifen von Paletten (40) oder anderen Gegenständen bilden.

2. Greiferkopf nach Anspruch 1, der als Jalousiegreiferkopf (10) mit zweiteiligem beweglichem Rollboden (52) ausgebildet ist, wobei die zueinander in horizontaler Richtung beweglichen Rollbodenteile jeweils zueinander weisende Stirnseiten aufweisen, die als Mittel (30) zum Greifen, Halten und / oder Untergreifen von Paletten (40) oder anderen Gegenständen ausgebildet sind.

3. Greiferkopf nach Anspruch 1, der als Plattengreiferkopf mit zweiteiligem, horizontal beweglichem Auflageboden (50) ausgebildet ist, wobei die zueinander in horizontaler Richtung beweglichen Auflagebodenteile jeweils zueinander weisende Stirnseiten aufweisen, die als Mittel (30) zum Greifen, Halten und / oder Untergreifen von Paletten (40) oder anderen Gegenständen ausgebildet sind.

4. Greiferkopf nach einem der Ansprüche 1 bis 3, dessen stirnseitig an den Auflageflächen (50) angeordneten Mittel (30) zum Greifen, Halten und/oder Untergreifen der Paletten oder Gegenstände durch formschlüssig ineinander greifende Verzahnungsprofile ausgebildet sind.

5. Greiferkopf nach einem der Ansprüche 1 bis 3, dessen stirnseitig an den Auflageflächen (50) angeordneten Mittel (30) zum Greifen, Halten und / oder Untergreifen der Paletten (40) oder Gegenstände durch zumindest randseitig haftende und / oder die Paletten (40) oder Gegenstände reibschlüssig greifende und / oder klemmend haltende Greif- und Haltemittel ausgebildet sind.

6. Greiferkopf nach einem der Ansprüche 1 bis 5, bei dem die stirnseitig an den Auflageflächen (50) angeordneten Mittel (30) zum Greifen, Halten und / oder Untergreifen der Paletten (40) oder Gegenstände durch aufeinander zugestellte und / oder mit einer gegensinnig wirkenden Schließkraft beaufschlagten Stirnseiten die Paletten (40) oder Gegenstände klemmend halten.

7. Beladestation zur Aufnahme und zum Umsetzen von gruppierten Lagen (22) von Gebinden (20) und / oder Artikeln von einer ersten Position und zum Freigeben der Lagen (22) in einer zweiten Position, die wenigstens einen Greiferkopf gemäß einem der Ansprüche 1 bis 6 aufweist, der eine ein-, zwei- oder mehrteilige horizontal bewegliche Auflagefläche (50) umfasst, die in geschlossenem Zustand aneinander grenzende und/oder formschlüssig ineinander greifende Stirnseiten aufweist, die in geöffnetem Zustand Mittel (30) zum Greifen, Halten und/oder Untergreifen von Paletten (40) oder anderen Gegenständen bilden.

8. Beladestation nach Anspruch 7, die mindestens eine, vorzugsweise zwei bewegliche Gebindetragflächen (50) aufweist, insbesondere einen Rollenteppich (52), der die Lage (22) unterfährt und beim Umsetzvorgang verschlossen ist.

9. Beladestation nach Anspruch 7 oder 8, die mit mindestens einer ersten Gebindelage (22) und mindestens einer Palette (40) oder mindestens einer zweiten Gebindelage beladbar ist.

10. Beladestation nach einem Ansprüche 7 bis 9, wobei die Palette (40) oder zweite Gebindelage an der Beladestation durch Greifen oder durch eine reibschlüssige Klemmverbindung befestigbar ist.

11. Verfahren zur Aufnahme und zum Umsetzen von gruppierten Lagen (22) von Gebinden (20) und / oder Artikeln von einer ersten Position und zum Freigeben der Lagen (22) in einer zweiten Position, bei dem die gruppierten Lagen (22) mit wenigstens einem Greiferkopf gemäß einem der Ansprüche 1 bis 6 bewegt werden, wobei dessen ein-, zwei- oder mehrteilige horizontal bewegliche Auflagefläche (50) in geschlossenem Zustand aneinander grenzende und / oder formschlüssig ineinander greifende Stirnseiten aufweist, die in geöffnetem Zustand Paletten (40) oder andere Gegenstände greifen, halten und/oder untergreifen, wobei sie die Paletten (40) oder Gegenstände durch aufeinander zugestellte und / oder mit einer gegensinnig wirkenden Schließkraft beaufschlagten Stirnseiten klemmend halten.

## Claims

1. Gripper head for grouped layers (22) of bundles (20) and/or articles, said gripper head comprising a one-, two-, or multi-part, horizontally movable support surface (50, 52) for receiving and transposing the layers (22) from a first position and for releasing the layers (22) in a second position by opening the movable support surface (50) wherein the horizontally movable support surface (50) comprises face sides that are adjacent to each other and/or form-lockingly interlock with each other when the support surface (50) is in a closed state, said gripper head **characterised in that** the face sides, in an at least partly open state, form means (30) for gripping, holding, and/or supporting pallets (40) or other objects.

2. Gripper head according to claim 1, said gripper head being formed as a shutter-type gripper head (10) with a two-part, movable roller floor (52) wherein the movable roller floor parts are movable in a horizontal direction in relation to each other and each comprise face sides that are turned towards each other, said face sides being formed as means (30) for gripping, holding, and/or supporting pallets (40) or other objects.

3. Gripper head according to claim 1, said gripper head being formed as a panel gripper head with a two-part, horizontally movable support floor (50) wherein the movable support floor parts are movable in a horizontal direction in relation to each other and each comprise face sides that are turned towards each other, said face sides being formed as means (30) for gripping, holding, and/or supporting pallets (40) or other objects.

4. Gripper head according to one of the claims 1 to 3, said gripper head having means (30) for gripping, holding, and/or supporting the pallets or objects wherein the said means (30) are arranged at the face sides of the support surfaces (50) and are formed by form-lockingly interlocking gear tooth profiles.

5. Gripper head according to one of the claims 1 to 3, said gripper head having means (30) for gripping, holding, and/or supporting the pallets (40) or objects wherein the said means (30) are arranged at the face sides of the support surfaces (50) and are formed by gripping or holding means, which cling at least to the edges of the pallets (40) or objects and/or friction-lockingly grip and/or clampingly hold the pallets (40) or objects.

6. Gripper head according to one of the claims 1 to 5, said gripper head having means (30) for gripping, holding, and/or supporting the pallets (40) or objects wherein the said means (30) are arranged at the face sides of the support surfaces (50) and clampingly hold the pallets (40) or objects by means of the face sides being turned towards each other and/or being each impinged with a clamping pressure acting in opposite directions to each other.

7. Loading station for receiving and for transposing grouped layers (22) of bundles (20) and/or articles from a first position and for releasing the layers (22) in a second position, said loading station comprising at least one gripper head according to one of the claims 1 to 6, which gripper head comprises a one-, two-, or multi-part, horizontally movable support surface (50) having face sides which are adjacent to each other and/or form-lockingly interlock with each other when the support surface (50) is in a closed state and which face sides, in an open state, form means (30) for gripping, holding, and/or supporting pallets (40) or other objects.

8. Loading station according to claim 7, comprising at least one, preferably two, moveable bundle support surfaces (50), in particular a roller carpet, which passes under the layer (22) and is closed during the transposing operation.

9. Loading station according to claim 7 or 8, being loadable with at least one first bundle layer (22) and with at least one pallet (40) or at least one second bundle layer.

10. Loading station according to one of the claims 7 to 9 wherein the pallet (40) or the second bundle layer can be fastened to the loading station by gripping or by means of a friction-locking clamping connection.

11. Method for receiving and for transposing grouped layers (22) of bundles (20) and/or articles from a first position and for releasing the layers (22) in a second position wherein the grouped layers (22) are moved by means of at least one gripper head according to one of the claims 1 to 6, which gripper head comprises a one-, two-, or multi-part, horizontally movable support surface (50) having face sides which are adjacent to each other and/or form-lockingly interlock with each other when the support surface (50) is in a closed state and which face sides, in an open state, grip, hold, and/or support pallets (40) or other objects wherein the said face sides clampingly hold the pallets (40) or objects by means of the face sides being turned towards each other and/or being each impinged with a clamping pressure acting in opposite directions to each other.

## Revendications

1. Tête de préhension pour des couches groupées (22) de packs (20) et/ou d'articles, comprenant une surface d'appui (50, 52) en une, deux ou plusieurs parties qui est horizontalement déplaçable et destinée à recevoir et à déplacer lesdites couches (22) depuis une première position et à libérer lesdites couches (22) dans une seconde position en ouvrant le plan d'appui (50) mobile, ladite surface d'appui (50) horizontalement déplaçable présentant, en état fermé, des faces frontales contiguës les unes aux autres et/ou s'engageant à engagement positif les unes dans les autres, **caractérisée par le fait que** lesdites faces frontales forment, en état au moins partiellement ouvert, des moyens (30) pour saisir, maintenir et/ou saisir par-dessous des palettes (40) ou d'autres objets.

2. Tête de préhension selon la revendication 1, qui est réalisée en tant que tête de préhension à jalousie (10) ayant un fond mouvant (52) mobile en deux parties, dans laquelle les parties de fond mouvant qui sont déplaçables l'une par rapport à l'autre dans la direction horizontale présentent des faces frontales montrant respectivement les unes vers les autres qui sont réalisées en tant que moyens (30) pour saisir, maintenir et/ou saisir par-dessous des palettes (40) ou d'autres objets.

3. Tête de préhension selon la revendication 1, qui est réalisée en tant que tête de préhension de palette ayant un fond d'appui (50) en deux parties horizontalement déplaçable, dans laquelle les parties de fond d'appui qui sont déplaçables l'une par rapport à l'autre dans la direction horizontale présentent des faces frontales montrant respectivement les unes vers les autres qui sont réalisées en tant que moyens (30) pour saisir, maintenir et/ou saisir par-dessous des palettes (40) ou d'autres objets.

4. Tête de préhension selon l'une quelconque des revendications 1 à 3, dont les moyens (30) pour saisir, maintenir et/ou saisir par-dessous les palettes (40) ou objets, qui sont disposés de manière frontale sur lesdites surfaces d'appui (50), sont réalisés par des profilés à denture qui engrènent à engagement positif les uns dans les autres.

5. Tête de préhension selon l'une quelconque des revendications 1 à 3, dont les moyens (30) pour saisir, maintenir et/ou saisir par-dessous les palettes (40) ou objets, qui sont disposés de manière frontale sur lesdites surfaces d'appui (50), sont réalisés par des moyens de préhension et de maintien qui adhèrent au moins sur le bord et/ou qui saisissent par friction et/ou maintiennent par serrage les palettes (40) ou objets.

6. Tête de préhension selon l'une quelconque des revendications 1 à 5, dans laquelle les moyens (30) pour saisir, maintenir et/ou saisir par-dessous les palettes (40) ou objets, qui sont disposés de manière frontale sur lesdites surfaces d'appui (50), maintiennent par serrage les palettes (40) ou objets par le biais de faces frontales qui sont approchées les unes des autres et/ou soumises à une force de serrage agissant en sens inverse.

7. Poste de chargement pour recevoir et déplacer des couches groupées (22) de packs (20) et/ou d'articles depuis une première position et pour libérer lesdites couches (22) dans une seconde position, comprenant au moins une tête de préhension selon l'une quelconque des revendications 1 à 6, qui comprend une surface d'appui (50) en une, deux ou plusieurs parties qui est horizontalement déplaçable et qui présente, en état fermé, des faces frontales contiguës les unes aux autres et/ou s'engageant à engagement positif les unes dans les autres qui forment, en état ouvert, des moyens (30) pour saisir, maintenir et/ou saisir par-dessous des palettes (40) ou d'autres objets.

8. Poste de chargement selon la revendication 7, qui présente au moins une, de préférence deux surfaces de support de packs (50) mobiles, en particulier un tapis à rouleaux (52) qui passe sous la couche (22) et est fermé lors de l'opération de déplacement.

9. Poste de chargement selon la revendication 7 ou 8, qui peut être chargé d'au moins une première couche de packs (22) et d'au moins une palette (40) ou d'au moins une deuxième couche de packs.

10. Poste de chargement selon l'une quelconque des revendications 7 à 9, dans lequel la palette (40) ou la deuxième couche de packs peut être fixée sur ledit poste de chargement soit par préhension soit par une liaison de serrage entraînée par friction.

11. Procédé de réception et de déplacement de couches groupées (22) de packs (20) et/ou d'articles depuis une première position et de libération desdites couches (22) dans une seconde position, dans lequel les couches groupées (22) sont déplacées par au moins une tête de préhension selon l'une quelconque des revendications 1 à 6, la surface d'appui (50) en une, deux ou plusieurs parties horizontalement déplaçable de celle-ci présentant, en état fermé, des faces frontales contiguës les unes aux autres et/ou s'engageant à engagement positif les unes dans les autres, qui, en état ouvert, saisissent, maintiennent et/ou saisissent par-dessous des palettes (40) ou d'autres objets tout en maintenant par serrage lesdites palettes (40) ou objets par le biais de faces frontales qui sont approchées les unes des autres et/ou soumises à une force de serrage agissant en sens inverse.
